Europäisches Patentamt

European Patent Office

Office européen des brevets

(11) Veröffentlichungsnummer: **0 563 499 A1**

(12) **EUROPÄISCHE PATENTANMELDUNG**

(21) Anmeldenummer: **92810236.7**

(22) Anmeldetag: **31.03.92**

(51) Int. Cl.5: **F23B 7/00**, F23B 1/14, F24B 5/04

(43) Veröffentlichungstag der Anmeldung:
**06.10.93 Patentblatt 93/40**

(84) Benannte Vertragsstaaten:
**AT CH DE FR IT LI SE**

(71) Anmelder: **LIEBI LNC AG**
**Burgholz**
**CH-3753 Oey-Diemtigen(CH)**

(72) Erfinder: **Liebi, Harald**
**Moosmattenstrasse**
**CH-3770 Zweisimmen(CH)**

(74) Vertreter: **Fischer, Franz Josef et al**
**BOVARD AG**
**Patentanwälte VSP**
**Optingenstrasse 16**
**CH-3000 Bern 25 (CH)**

(54) **Holzvergaserkessel.**

(57) Es wird ein Holzvergaserheizkessel (1) beschrieben, welcher nach dem Umkehrflammenprinzip funktioniert. Durch eine Vergrösserung der Nachschaltheizflächen auf Zwischenwänden (6) aus feuerfestem Material, das gleichzeitig als Verbrennungskatalysator wirkt, werden einerseits die Verbrennungsgase vollständig gemischt und andererseits einer praktisch vollständigen Nachverbrennung unterworfen. Die Verbrennungsluft wird als Primär- und Sekundärluft dem Brennmaterial (9) zugeführt, wobei die Luft mittels eines Saugventilators (13, 14) angesaugt wird.

Die Anordnung führt zu einer vollständigen Verbrennung des Holzes, wobei der Wirkungsgrad verbessert werden konnte und die Abgaswerte praktisch denjenigen von Oelfeuerungen entsprechen.

FIG. 2

EP 0 563 499 A1

Die vorliegende Erfindung betrifft einen Heizkessel des Holzvergasertyps mit unterem Abbrand, insbesondere mit einer Umkehrflamme. Die Ausgestaltung des Feuerraumes und die Anordnung eines Sauggebläses ermöglicht eine Verbesserung der Abgaswerte und eine Verminderung des Aschenanfalls.

Holzvergaserkessel mit unterem Abbrand, welche Verbrennungsluftgebläse aufweisen, sind bekannt. Im Betrieb wird die zugeführte Luft in Primär- und Sekundärluft aufgeteilt. Die Brennkammer besteht aus hitzebeständigem Stahl und umfasst Nachschaltheizflächen. Mit derartigen Heizkesseln konnten die Verbrennung und auch die Abgaswerte gegenüber den vorher bekannte Holzheizkesseln wesentlich verbessert werden. Die erzielten Werte entsprachen jedoch nicht denjenigen von Ölfeuerungen.

Die Aufgabe der vorliegenden Erfindung besteht darin, einen Holzvergaserheizkessel zur Verfügung zu stellen, welcher bei der Verbrennung noch bessere Abgaswerte liefert, nämlich solche, die mit denjenigen von Ölfeuerungen vergleichbar sind.

Überraschenderweise wurde gefunden, dass ein Holzvergaserkessel des eingangs erwähnten Typs verbesserte Abgaswerte liefert, wenn er mit einem Sauggebläse im Rauchabzugssystem und mit mindestens zweistufigen Nachschaltheizflächen aus feuerfestem keramischem Material im Feuerraum ausgestattet wird. Dadurch wird nicht nur eine bessere Durchmischung der Heizgase, sondern auch eine weitgehend vollständige Verbrennung erzielt.

Gegenstand der vorliegenden Erfindung ist demzufolge der im Patentanspruch 1 definierte Heizkessel.

Der erfindungsgemässe Heizkessel mit unterem Abbrand arbeitet nach dem Umkehrflammenprinzip. Durch eine Anordnung von Lufteinlassventilen wird die von einem Sauggebläse in den Brennraum angesaugte Luft regelbar in Primär- und Sekundärluft aufgeteilt. Die Primärluft passiert das Brennmaterial und verursacht die dem Umkehrflammenprinzip eigene nach unten gerichtete Flamme. Die Sekundärluft wird durch ein Leitungssystem in der Brennerplatte nach unten geführt, wodurch sie den Flammenkern tangiert. Die Brennkammer besitzt vorzugsweise eine im wesentlichen halbzylindrische Form, wobei die rechteckige Seitenfläche durch die Brennerplatte gebildet wird und die gekrümmte Fläche mit den beiden halbkreisförmigen Stirnseiten eine Art Wanne bilden. Die genannten halbkreisförmigen Flächen bilden die Rückwand des Feuerraums und die Feuerraumtüre. Im Feuerraum befinden sich vorzugsweise Zwischenwände aus feuerfestem keramischem Material, vorzugsweise deren zwei, die parallel zur gekrümmten Oberfläche angeordnet sind. Zwischen der Rückwand des Feuerraumes und der ersten Zwischenwand und zwischen der Feuerraumtüre und der zweiten Zwischenwand befinden sich Aussparungen, die Durchlassöffnungen für die Verbrennungs- und Rauchgase bilden. Durch diese Anordnung werden einerseits die gebildeten Gase gut durchmischt und andererseits innig mit den feuerfesten Zwischenwänden, die auch katalytisch aktive Komponenten enthalten können, in Kontakt gebracht. Die Rauchgase werden durch das Sauggebläse weiter in den Rauchabzug und den Kamin befördert. Zur Steuerung der Verbrennung befindet sich innerhalb des Abzugs, vorzugsweise im Rauchgassammler eine Sonde zur Messung der Abgastemperatur. Durch diese Sonde kann die Tourenzahl des Gebläsemotors gesteuert werden. Diese Steuerung dient sowohl dem Erhalt optimaler Abgaswerte wie auch einer optimalen Verbrennung des Brennstoffes mit minimaler Aschenbildung, wobei die Zeitdauer der Verbrennung in einem bestimmten Rahmen gesteuert werden kann.

In einer bevorzugten Ausführungsform wird die Heizluft in einem Wärmetauscher durch die Rauchgase vorgeheizt, wodurch der Wikungsgrad weiter erhöht werden kann.

Messung der Abgaswerte

Mit einem Messgerät (Produkt der Firma Alba-Therm AG, CH-8604 Volketswil) wurden die Abgase eines erfindungsgemässen Heizkessels (3-Zug-Ausführung) gemessen. Die Leistung des Kessel betrug 62 kW, der Saugventilator drehte mit 2800 Umdrehungen/min (Leistung ≈30%). Als Brennmaterial dienten 2 Jahre gelagerte Buchenholzscheite.

Messung 1

| Messung 2 |  |  |
|---|---|---|

| Messung 1 | | | Messung 2 | | |
|---|---|---|---|---|---|
| Leistung | 60 | kW | Leistung | 62 | kW |
| Raumtemperatur | 17 | °C | Raumtemperatur | 18 | °C |
| Gastemperatur | 157 | °C | Gastemperatur | 157 | °C |
| $O_2$ | 9,0 | % | $O_2$ | 8,7 | % |
| CO | 977 | mg N | CO | 293 | mg N |
| NO | 97 | mg N | NO | 115 | mg N |
| $SO_2$ | 0 | mg N | $SO_2$ | 0 | mg N |
| $CO_2$ | 11,9 | % | $CO_2$ | 12,2 | % |
| Eta | 90,7 | % | Eta | 91,0 | % |
| Lambda | 1,75 | | Lambda | 1,71 | |
| Bezogen | 13,0 | % $O_2$ | Bezogen | 13,0 | % $O_2$ |

Eta = feuertechnischer Wirkungsgrad

Lambda= Luftüberschuss

Interpretation der obigen Werte:

In konventionellen Holzvergaser-Heizkesseln liegt die Verbrennungstemperatur oberhalb von 220 °C, während sie im erfindungsgemässen Kessel um 157 °C liegt. Die Abgaswerte liegen im Bereich von Ölfeuerungen, was bisher für Holzkessel als schwer erreichbar galt. Bei besserer Abdichtung des Rauchrohres können $CO_2$-Werte von 14-15 % erzielt werden.

Die vorliegende Erfindung wird beispielsweise durch die beiliegenden Zeichnungen näher erläutert; es zeigt

Fig. 1 einen Querschnitt durch einen erfindungsgemässen Heizkessel; und

Fig. 2 einen Längsschnitt entlang der Linie II-II des in Fig 1 dargestellten Kessels.

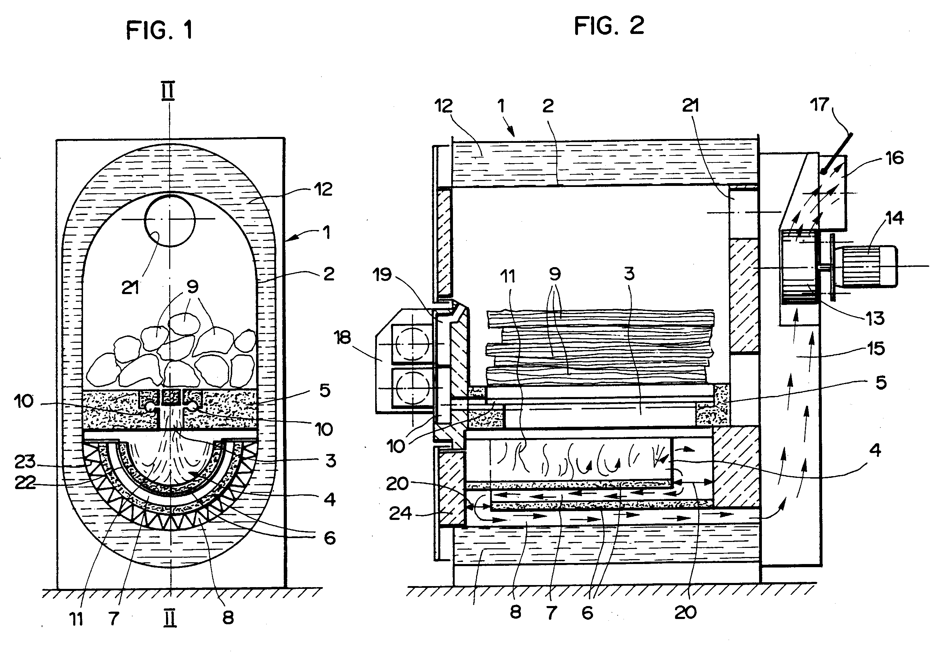

Fig. 1 zeigt einen Querschnitt eines erfindungsgemässen Kessels 1 von der Frontseite her gesehen. In der Brennkammer 2 befindet sich die Brennerplatte 5, unter welcher der Feuerraum 4 angeordnet ist. In der Brennerplatte befindet sich die Verbrennungszone 3, durch welche die brennenden Gase des verbrennenden Holzes 9 in den Feuerraum 4 eindringen. Der Feuerraum 4, der einen halbkreisförmigen Querschnitt besitzt, weist die Zwischenwände 6 auf, die in einem gegenseitigen Abstand, bzw. in einem Abstand von der Wand des Feuerraums, angeordnet sind. Die Zwischenwände sind auf den Trägerelementen 22 bzw. den Wärmeleitblechen 23 gelagert. Zur Entfernung der Asche muss zumindest die obere kännelförmige Zwischenwand leicht zu entfernen sein. Die Zwischenwände 6 bestehen aus einem feuerfesten keramischen Material, vorzugsweise aus Schamottestein. Ebenso besteht die Brennerplatte aus einem solchen Material. In der Brennerplatte sichtbar sind die entlang der Verbrennungszone 3 liegenden Kanäle 10, durch welche die Sekundärluft zur Flamme 11 gelangen kann. Die Brennkammer bzw der Feuerraum, sind mindestens teilweise von einem Wassermantel umgeben, welcher an einem Kreislauf angeschlossen ist. Im oberen Teil der Brennkammer befindet sich der sogenannte Rauchgas-Bypass, in Form einer mit einer Klappe verschlossenen Öffnung (kann nach Bedarf geöffnet werden). Während die obere Zwischenwand 6 auf der bezüglich der Zeichnungsebene hinteren Seite nicht bis an die hintere Stirnseite geführt ist, ist die untere Zwischenwand, an der oberhalb der Zeichenebene liegenden Seite, nicht vollständig nach vorn geführt. Dadurch werden Durchlassöffnungen gebildet, durch welche die Abgase durchtreten und durch das Sauggebläse in den Rauchgassammler gesogen werden können. Beim Kontakt der Verbrennungsgase mit den heissen und katalytisch wirksamen feuerfesten Materialien der Zwischenwände 6, werden zum einen die Gase vollständig gemischt und zum andern genügend lange mit den heissen Zwischenwänden 6 in Kontakt gehalten, wodurch ihre Verbrennung vollständig erfolgt. Dabei treten die Rauchgase zuerst durch den oberen Rauchgaszug 7, anschliessend durch den unteren Rauchgaszug 8, in den Rauchabzug.

Fig. 2 zeigt einen Schnitt entlang der Linie II-II von Fig. 1 des erfindungsgemässen Holzvergaserkessels 1. Auf der unteren und oberen Seite des Heizkessels sind Teile des an einen Kreislauf angeschlossenen Wassermantels 12 ersichtlich. In der Brennkammer befindet sich das Brennmaterial 9, welches auf der Brennerplatte 5 liegt. Die Brennerplatte besitzt eine Aussparung, welche als Verbrennungszone 3 dient. Anliegend an diese Verbrennungszone befinden sich Zuführungsleitungen 10 für Sekundärluft. Auf der Frontseite befindet sich das Ansaug- und Regelungssystem zum Ansaugen der Luft, wobei die Luft in Primärluft und Sekundärluft aufgeteilt werden kann. Ihre Anteile können manuell oder elektronisch geregelt werden. Während die Primärluft durch den Kanal 19 zum Brennstoff gelangt, wird die Sekundärluft durch den Kanal 10 direkt der Verbrennungszone 3 zugeführt. Die Luft wird durch das Sauggebläse 14, welches sich im Rauchgassammler 15 befindet, angesaugt. Durch die Verbrennung werden die feuerfesten Zwischenwände 6 erwärmt und die Verbrennungsgase werden mit diesem Material in Kontakt gebracht. Im dargestellten 3-Zugsystem werden die Verbrennungsgase im Feuerraum zuerst nach rechts gezogen um nach der ersten Zwischenwand im Rauchgaszug 4 nach links gezogen zu werden und dort zwischen der Feuerraumtüre 24 und der zweiten Zwischenwand, nach unten gesogen zu werden und sich im Rauchgaszug 8 nach rechts in den Rauchgassammler 15 zu bewegen. Im Rauchgassammler befindet sich im Bereich des Sauggebläseventilators 14, 16 eine Temperatursonde 17, welche die Temperatur der Rauchgase misst, die durch den Rauchgasabzug 16 dem Kamin zugeführt werden. Je nach Temperatur dieser Rauchgase kann die Tourenzahl des Gebläsemotors 14, bzw. des Gebläseventilators 13, geregelt werden. Dadurch kann die Verbrennung optimiert werden. Die Abwärme des Rauchgassammlers kann zur Vorwärmung der Primär- und Sekundärluft verwendet werden, indem die angesaugte Luft durch einen Kanal entlang des Rauchgassammlers 15 geführt wird, bevor sie durch das System 18 in den Verbrennungsraum geführt wird.

**Patentansprüche**

1.  Heizkessel des Holzvergasertyps mit unterem Abbrand umfassend einen Verbrennungsraum (2) zur Aufnahme und zum Abbrennen von Holz (9), eine Brennerplatte (5), einen Feuerraum (4) unter der Brennerplatte, mindestens ein Wärmetauschersystem (12), ein Verbrennungsluftgebläse (13, 14) zur Zuführung von Primär- und Sekundärluft und ein vom Verbrennungsraum wegführendes Rauchgasabzugssystem (15, 16), dadurch gekennzeichnet, dass das Verbrennungsluftgebläse (13) ein Saugluftgebläse ist, das im Rauchgassammler (15) oder im Rauchabzug angeordnet ist, und dass der Feuerraum (4) im wesentlichen auf der Brennerplatte (5) entgegengesetzten Seite derart mit mindestens zwei, je eine Öffnung aufweisende Zwischenwänden (6) aus feuerfestem Keramikmaterial, die einen gegenseitigen Abstand bzw. einen Abstand von der Wand aufweisen, ausgekleidet ist, dass die Zwischenwände (6) Öffnungen (20) für die Rauchgase aufweisen, durch welche sie in das Abzugssystem abziehen können, wobei sie eine Durchmischung erfahren und am heissen keramischen Material eine möglichst vollständige Nachverbrennung erfolgt, wodurch der Aschenanfall und der Schadstoffausstoss minimalisiert wird.

2.  Heizkessel nach Anspruch 1, dadurch gekennzeichnet, dass der Feuerraum (4) im wesentlichen die Form eines Halbzylinders besitzt, dessen rechteckige Fläche an die Brennerplatte (5) grenzt.

3.  Heizkessel nach Anspruch 2, dadurch gekennzeichnet, dass im Feuerraum die Zwischenwände (6) aus feuerfestem Material koaxial und parallel zur gekrümmten Halbzylinderoberfläche angeordnet sind und sich die Durchlassöffnungen (20) für Rauchgase in den benachbarten Zwischenwänden (6) entgegengesetzt angrenzend an die Stirnseiten des Feuerraumes befinden.

4.  Heizkessel nach einem der Ansprüche 1 bis 3, dadurch gekennzeichnet, dass das Sauggebläse im Rauchgassammler integriert ist.

5.  Heizkessel nach Anspruch 4, dadurch gekennzeichnet, dass im Rauchgasabzugssystem eine Temperatursonde angeordnet ist, welche der Steuerung der Tourenzahl des Sauggebläses dient.

6.  Heizkessel nach einem der Ansprüche 1 bis 5, dadurch gekennzeichnet, dass die Zwischenwände (6) aus Schamottestein bestehen.

7.  Heizkessel nach einem der Ansprüche 1 bis 6, dadurch gekennzeichnet, dass zur Vorwärmung der Verbrennungsluft im Bereich des Rauchgasabzuges ein Wärmeaustauschsystem vorgesehen ist, welches zur Übertragung eines Teils der Wärme der Rauchgase an die vom Heizkessel angesaugte frische

Luft dient.

FIG. 1

FIG. 2

EP 0 563 499 A1

Europäisches Patentamt

# EUROPÄISCHER RECHERCHENBERICHT

Nummer der Anmeldung

EP    92 81 0236

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 589 988 (HS KEDLER-TARM A/S.) <br> * Seite 8, Zeile 1 - Zeile 25 * <br> * Seite 9, Zeile 5 - Zeile 16 * <br> * Zusammenfassung; Abbildung 1 * <br> --- | 1 | F23B7/00 <br> F23B1/14 <br> F24B5/04 |
| A | EP-A-0 124 945 (VAN DER VOORT) <br> * Seite 4, Zeile 34 - Seite 5, Zeile 32 * <br> * Zusammenfassung; Abbildungen 1,2 * <br> --- | 1 | |
| A | DE-U-8 407 225 (VIESSMANN) <br><br> ----- | | |

| | |
|---|---|
| | **RECHERCHIERTE SACHGEBIETE (Int. Cl.5 )** |
| | F23B <br> F23G <br> F24B |

Der vorliegende Recherchenbericht wurde für alle Patentansprüche erstellt

| Recherchenort | Abschlußdatum der Recherche | Prüfer |
|---|---|---|
| DEN HAAG | 24 NOVEMBER 1992 | LEITNER J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................
& : Mitglied der gleichen Patentfamilie, übereinstimmendes Dokument